# EUROPEAN PATENT SPECIFICATION

(11) **EP 2 529 980 B1**
(45) Date of publication and mention of the grant of the patent: **15.10.2014**
(21) Application number: 10844957.0
(22) Date of filing: 07.07.2010
(51) Int. Cl.: B60R 19/04

(54) **BUMPER REINFORCEMENT STRUCTURE**
STOSSFÄNGERVERSTÄRKUNGSSTRUKTUR
STRUCTURE DE RENFORT DE PARE-CHOCS

(43) Date of publication of application: 05.12.2012
(73) Proprietor: TOYOTA JIDOSHA KABUSHIKI KAISHA, Toyota-shi, Aichi-ken, 471-8571 (JP)
(72) Inventor: KAMIYA, Kenta, Toyota-shi, Aichi-ken, 471-8571 (JP); KOSAKA, Naoya, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2010/061548
(87) International publication number: WO 2012/004869

(56) References cited:
- WO-A1-2009/101981
- JP-A- 10 230 798
- JP-A- 11 078 732
- JP-A- 2003 182 481
- JP-A- 2003 252 134
- JP-A- 2004 262 300
- JP-A- 2008 080 924
- KR-A- 20100 024 764
- US-A1- 2004 130 166
- US-A1- 2008 309 103

## Description

### Technical Field

The present invention relates to a bumper reinforcement structure.

### Related Art

Patent Document 1 describes a vehicle front section structure equipped with a bumper beam extending in the vehicle width direction and an impact absorbing member provided at the front side of the bumper beam. The impact absorbing member is formed higher than the height of the bumper beam. Accordingly, during vehicle frontal impact, impact load can be absorbed well by the impact absorbing member even for different heights of impact bodies.
US 2004/0130166 A1 discloses a bumper beam consisting of a profile made of a single folded metal sheet blank.
Patent Document 1: JP 2009-35027 A
Patent Document 2: JP 2003-252134 A
Patent Document 3: JP 2007-261525 A
Patent Document 4: JP 2008-080924 A, this disclosing a bumper reinforcement structure according to the preamble of claim 1.

### Disclosure of the Invention

### Problem to be Solved by the Invention

However, in the example described in Patent Document 1, when the flexural rigidity of the impact absorbing member is high, there is concern regarding it becoming difficult to ensure a vehicle top-bottom direction deformation stroke with an impact body in the vehicle front section when an impact load is input to the vehicle front section from both the vehicle front side and the vehicle top side, for example due to impact between the vehicle and the impact body such as the femoral region of a pedestrian.

The present invention is made in consideration of the above issue, and has an object of providing a bumper reinforcement structure that can ensure a vehicle top-bottom direction deformation stroke with the impact body in the vehicle front section when an impact load is input to the vehicle front section from both the vehicle front side and the vehicle top side, while still ensuring impact resistance during vehicle frontal impact.

### Method of Solving the Problem

In order to address the above issue, a bumper reinforcement structure according to the present invention includes: a bumper reinforcement to be provided to a vehicle front section and extending in the vehicle width direction; an upper member, being separate from and fixed to the bumper reinforcement and including a front panel section joined to the bumper reinforcement, a top panel section connected to a top edge portion of the front panel section, and a rear panel section connected to a rear edge portion of the top panel section, the upper member being formed with a C-shaped cross-section opening towards the vehicle bottom side, the upper member forming a closed cross-section portion with a top wall portion of the bumper reinforcement at the vehicle top side of the bumper reinforcement; and a displacement facilitation portion provided to the rear panel section, the displacement facilitation portion allowing the top panel section to displace towards the vehicle bottom side when an impact load is input with respect to the top panel section from both the vehicle front side and the vehicle top side.

According to such a bumper reinforcement structure, there is a closed cross-section portion formed by the upper member at the vehicle top side of the bumper reinforcement. Consequently, due to provision of both the upper member and the bumper reinforcement, the overlapping amount in the vehicle top-bottom direction with an impact body from the vehicle front side can be increased, in comparison to cases in which only the bumper reinforcement is provided. Accordingly, the impact resistance can be ensured during vehicle frontal impact.

Moreover, when an impact body impacts the vehicle front section from both the vehicle front side and the vehicle top side and an impact load is input with respect to the top panel section from both the vehicle front side and the vehicle top side, the top panel section displaces towards the vehicle bottom side due to the displacement facilitation portion. Accordingly, a vehicle top-bottom direction deformation stroke with the impact body in the vehicle front section can be ensured.

In a bumper reinforcement structure according to a second preferable aspect of the present invention, a sloping portion is formed at least at the front edge portion side of the top panel section, sloping with respect to the vehicle front-rear direction so as to face toward both the vehicle front side and the vehicle top side.

According to such a bumper reinforcement structure, the sloping portion is formed at least at the front edge portion side of the top panel section, with the sloping portion sloping with respect to the vehicle horizontal direction so as to face both the vehicle front side and the vehicle top side. Consequently, since the impact load is input substantially perpendicularly to the sloping portion when the impact body impacts the vehicle front section from both the vehicle front side and the vehicle top side, and hence the impact load can be efficiently transmitted to the displacement facilitation portion. Accordingly, the top panel section can be efficiently displaced towards the vehicle bottom side.

In a bumper reinforcement structure according to a third preferable aspect of the present invention, the displacement facilitation portion is a joint portion that joins the rear panel section and a rear wall portion of the bumper reinforcement, and the joined state of the rear panel section and the rear wall portion is released when an impact load is input with respect to the top panel section from both the vehicle front side and the vehicle top side.

According to such a bumper reinforcement structure, when an impact load is input with respect to the top panel section from both the vehicle front side and the vehicle top side, the top panel section can be displaced together with the rear panel section towards the vehicle bottom side by the joined state of the rear panel section and the rear wall portion being released.

In a bumper reinforcement structure according to a fourth preferable aspect of the present invention, the joint portion is configured to be a fastening structure including a fastener that passes though the rear panel section and the rear wall portion and fastens the rear panel section and the rear wall portion together, and an escape hole formed continuously toward the vehicle top side from the position of the fastener in the rear panel section.

According to such a bumper reinforcement structure, increase in cost can be suppressed, since only the addition of the escape hole to a conventional fastening structure is required.

In a bumper reinforcement structure according to a fifth preferable aspect of the present invention, the fastening structure includes a latching portion formed further to the vehicle top side than the position of the fastener in the rear panel section, with the latching portion latching the fastener.

According to such a bumper reinforcement structure, since the fastener is latched by the latching portion during normal operation, the fastener can be suppressed from relative movement towards the top edge portion side of the escape hole. On the other hand, the fastener moves past the latching portion when an impact load is input with respect to the top panel section from both the vehicle front side and the vehicle top side, and due thereto, the fastener can be caused to move relatively towards the top edge portion side of the escape hole.

In a bumper reinforcement structure according to a sixth aspect of the present invention, the joint portion is configured to be a rear weld portion that joins the rear panel section to the rear wall portion with a weld strength lower than that of a front weld portion that joins the front panel section to the bumper reinforcement.

An increase in cost can also be suppressed according to such a bumper reinforcement structure, since a special joining structure is not required for joining the rear panel section and the rear wall portion together.

In a bumper reinforcement structure according to a seventh aspect of the present invention, the displacement facilitation portion is configured to be a deformation origin point portion that acts as the origin point for deformation of the rear panel section such that the rear panel section is compressively deformed, when an impact load is input with respect to the top panel section from both the vehicle front side and the vehicle top side.

According to such a bumper reinforcement structure, when an impact load is input with respect to the top panel section from both the vehicle front side and the vehicle top side, the top panel section can be displaced towards the vehicle bottom side by the rear panel section being compressively deformed with the deformation origin point portion acting as the origin point.

In a bumper reinforcement structure according to an eighth aspect of the present invention, the deformation origin portion is configured to be a bead formed between the joint portion joining the rear panel section with the rear wall portion of the bumper reinforcement and a top edge portion of the rear panel section, and extending in the vehicle width direction.

According to such a bumper reinforcement structure, a cost increase can be suppressed since the rear panel section can be caused to perform compressive deformation with a simple configuration, just by provision of the bead.

### Effect of the Invention

As detailed above, according to the present invention, a vehicle top-bottom direction deformation stroke with the impact body in the vehicle front section is ensured when an impact load is input to the vehicle front section from both the vehicle front side and the vehicle top side, while still ensuring impact resistance during vehicle frontal impact.

### Brief Description of the Drawings

Fig. 1 is a cross-section showing vehicle front section applied with a bumper reinforcement structure according to a first exemplary embodiment of the present invention, as viewed from the side.
Fig. 2 is an exploded perspective view of the bumper reinforcement structure illustrated in Fig. 1.
Fig. 3 is a cross-section illustrating an impacted state of an impact body from the vehicle front side to the vehicle front section illustrated in Fig. 1, as viewed from the side.
Fig. 4 is a cross-section illustrating an impacted state of an impact body from both the vehicle front side and the vehicle top side to the vehicle front section illustrated in Fig. 1, as viewed from the side.
Fig. 5 is a perspective view of a bumper reinforcement structure according to a second exemplary embodiment of the present invention, as viewed diagonally from the vehicle front side.
Fig. 6 is a perspective view of the bumper reinforcement structure illustrated in Fig. 5, as viewed diagonally from the vehicle rear side.
Fig. 7 is an exploded perspective view of a bumper reinforcement structure according to a third exemplary embodiment of the present invention.
Fig. 8 is a perspective view of an upper member illustrated in Fig. 7.
Fig. 9 is a cross-section illustrating an impacted state of an impact body from the vehicle front side to the vehicle front section illustrated in Fig. 7, as viewed from the side.
Fig. 10 is a cross-section illustrating an impacted state of an impact body from both the vehicle front side and the vehicle top side to the vehicle front section illustrated in Fig. 7, as viewed from the side.
Fig. 11 is perspective view showing a modified example of the upper member illustrated in Fig. 7.

### Best Mode of Implementing the Invention

### First Exemplary Embodiment

Explanation is first given regarding a first exemplary embodiment of the present invention.

In each of the drawings the arrow UP, the arrow FR and the arrow OUT indicate the top side in a vehicle top-bottom direction, the front side in a vehicle front-rear direction and the vehicle width direction outside (left side), respectively.

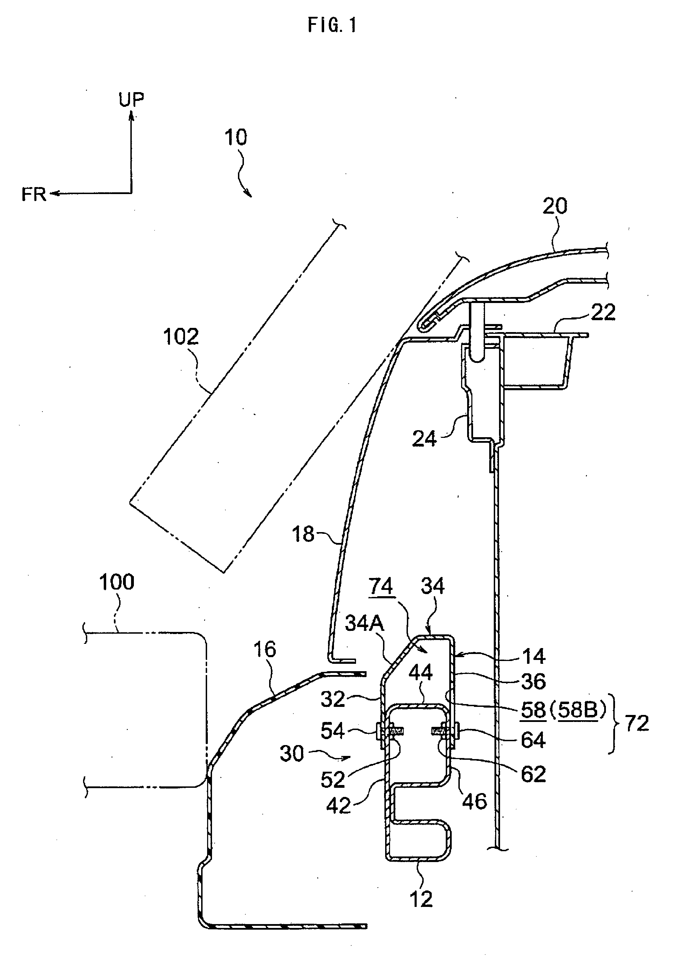

As shown in Fig. 1, a vehicle front section 10 is configured with a bumper reinforcement 12, an upper member 14, a bumper cover 16, a grill 18, a hood 20, a radiator support 22 and a hood lock 24.

The bumper reinforcement 12 and the upper member 14 together configure a bumper reinforcement structure 30 according to the first exemplary embodiment of the present exemplary embodiment.

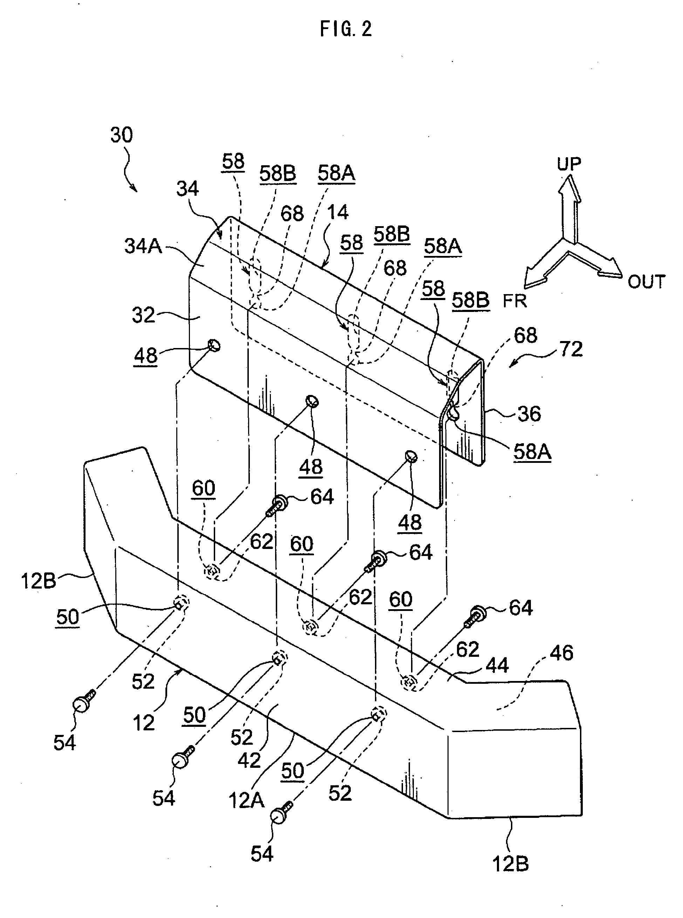

The bumper reinforcement 12 is formed in a hollow shape, extending in the vehicle width direction, as shown in Fig. 2. A central section 12A of the bumper reinforcement 12 is formed parallel to the vehicle width direction, left and right end sections 12B of the bumper reinforcement 12 are formed so as to bend around towards the vehicle rear side with respect to the central section 12A.

The upper member 14 is provided to the central section 12A of the bumper reinforcement 12 so as to extend along the vehicle width direction, and has a front panel section 32, a top panel section 34 and a rear panel section 36. The top panel section 34 is formed connected to a top edge portion of the front panel section 32, and the rear panel section 36 is formed connected to a rear edge portion of the top panel section 34. The upper member 14 is thereby formed with a C-shaped cross-section, opening towards the vehicle bottom side.

Plural holes 48 are formed in a lower portion of the front panel section 32, in a row along the vehicle width direction, and holes 50 are formed in an upper portion of a front wall portion 42 of the bumper reinforcement 12 at positions for fitting together with the respective holes 48. Nuts 52 are provided on the inside face of the front wall portion 42, coaxial to each of the holes 50. The front panel section 32 is fastened to the front wall portion 42 by inserting bolts 54 into the holes 48, 50 from the vehicle front side, and screwing the bolts 54 into the nuts 52.

Plural elongated holes 58 are formed in the rear panel section 36, in a row along the vehicle width direction. Each of the respective elongated holes 58 has an elongated shape extending along the vehicle top-bottom direction. Holes 60 are formed in an upper portion of a rear wall portion 46 of the bumper reinforcement 12 at positions for fitting together with lower edge portions 58A of the elongated holes 58. Nuts 62 are provided at the inside face of the rear wall portion 46, coaxial to the holes 60. The rear panel section 36 is fastened to the rear wall portion 46 by inserting bolts 64 into the lower edge portions of the elongated holes 58 and the holes 60 from the vehicle rear side, and screwing the bolts 64 into the nuts 62.

A constricted portion 68 is formed in the rear panel section 36, further towards the vehicle top side than the lower edge portion 58A of each of the elongated holes 58. The gap dimension at the constricted portion 68 is set so as to be just slightly smaller than the external diameter dimension of shaft portions of the bolts 64. The width dimension of the elongated holes 58 is set so as to be larger than the external diameter dimension of the shaft portion of the bolts 64, and smaller than the external diameter dimension of heads of the bolts 64. Configuration is made such that the constricted portions 68 are latched from the vehicle top side by the bolts 64 when the rear panel section 36 and the rear wall portion 46 are in a fastened state due to the bolts 64. The portions of the elongated holes 58 upper than the constricted portions 68 configure escape holes 58B.

Note that a fastening structure 72, configured by the above elongated hole 58 (escape hole 58B) and the bolt 64, corresponding to a fastener of the present invention, corresponds to a displacement facilitation portion and a joint portion of the present invention. Namely, the bolts 64 pass through the rear panel section 36 and the rear wall portion 46, and fasten the rear panel section 36 and the rear wall portion 46 together, with the escape holes 58B continuously formed toward the vehicle top side from the positions of the bolts 64 at the rear panel section 36. The constricted portions 68 correspond to a latching portion of the present invention.

As shown in Fig. 1, the upper member 14 attached to the bumper reinforcement 12 as described above forms a closed cross-section portion 74 with a top wall portion 44 of the bumper reinforcement 12 at the vehicle top side of the bumper reinforcement 12.

A sloping portion 34A is formed at the front edge side of the top panel section 34. The sloping portion 34A slopes with respect to the vehicle front-rear direction so as to face both the vehicle front side and the vehicle top side.

Explanation now follows regarding operation and effect of the first exemplary embodiment of the present invention.

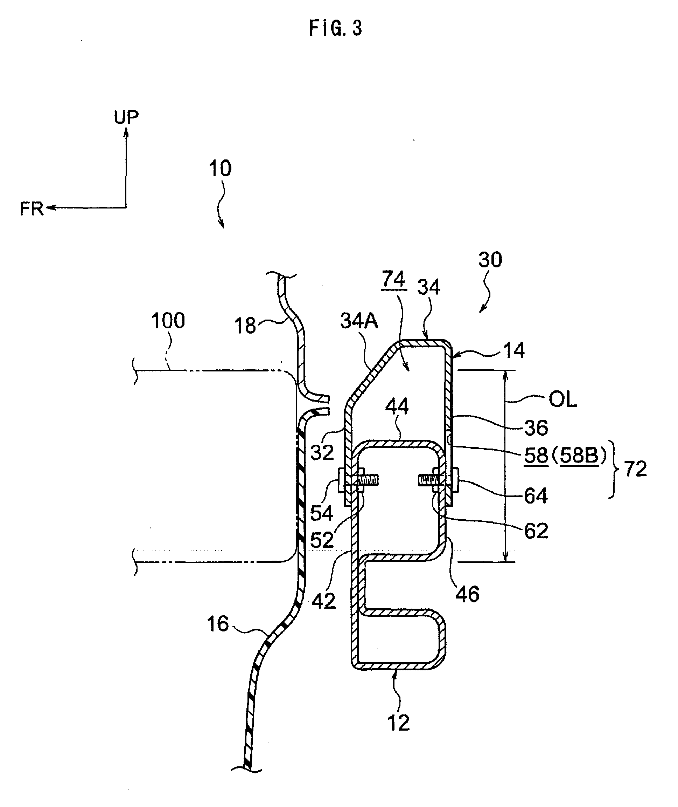

According to the bumper reinforcement structure 30, the closed cross-section portion 74 is formed by the upper member 14 at the vehicle top side of the bumper reinforcement 12. Consequently, as shown in Fig. 3, due to configuration with the upper member 14 and the bumper reinforcement 12, the overlap amount OL with an impact body 100 in the vehicle top-bottom direction from the vehicle front side can be increased in comparison to cases configured with only the bumper reinforcement 12.

Accordingly, the impact resistance of the vehicle front section10 during frontal impact, namely capability to prevent, for example, under-riding in which the vehicle dives below an oncoming vehicle, can be ensured.

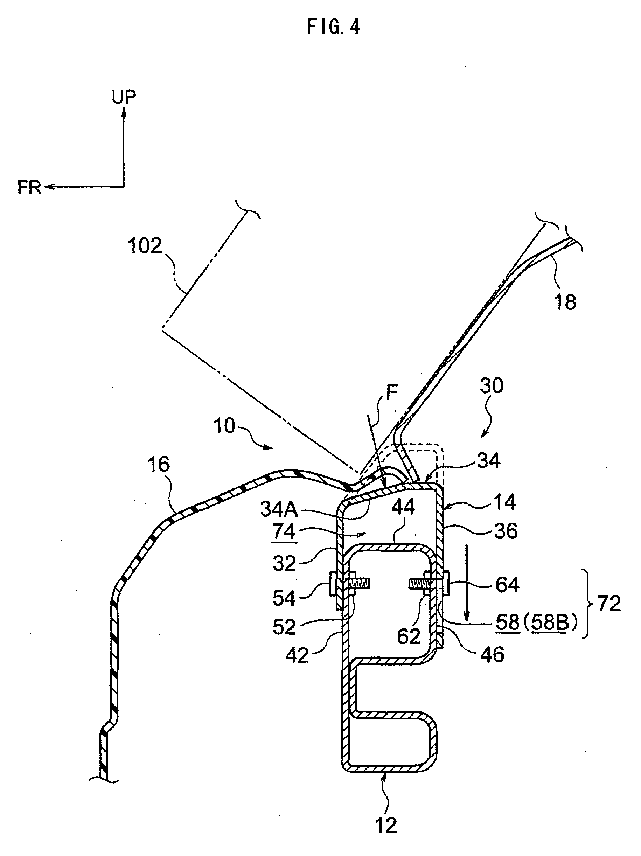

Further, as shown in Fig. 4, when an impact body 102, such as, for example, the femoral region of a pedestrian, impacts the vehicle front section 10, and an impact load F is input with respect to the top panel section 34 from both the vehicle front side and the vehicle top side, the fastened state of the rear panel section 36 and the rear wall portion 46 is released by the fastened state of the elongated holes 58 and the bolts 64 being released.

The bolts 64 then pass the constricted portions 68 and move relatively towards the top edge portion side of the escape holes 58B, and the top panel section 34, together with the rear panel section 36, are displaced towards the vehicle bottom side with the top edge portion of the front panel section 32 acting as an origin point. Consequently, a vehicle top-bottom direction deformation stroke with the impact body 102 at the vehicle front section 10 can be ensured, therefore, capability to protect pedestrians can also be ensured. Note that in this case the deformation stroke continues until the shaft portions of the bolts 64 contact the top edge portions of the escape holes 58B.

The sloping portion 34A is formed at the front edge side of the top panel section 34, and the sloping portion 34A is sloped with respect to the vehicle horizontal direction so as to face both the vehicle front side and the vehicle top side. Consequently, for example, in cases where an impact body 102 such as the femoral region of a pedestrian has impacted the vehicle front section 10, an impact load F is input substantially perpendicularly to the sloping portion 34A, and hence this impact load can be transmitted to the fastening structure 72 with good efficiency. Accordingly, the top panel section 34 can be displaced more efficiently towards the vehicle bottom side.

As shown in Fig. 3, even though the sloping portion 34A is also formed at the top panel section 34, since the height of the upper member 14 can be maintained, the required vehicle top-bottom direction overlap amount OL with the impact body 100 can be ensured.

Furthermore, according to the bumper reinforcement structure 30, increase in cost can be suppressed, since just the addition of the escape holes 58B to a conventional fastening structure is required.

Furthermore, during normal operation, since the bolts 64 are latched by the constricted portions 68, the bolts 64 can be prevented from relatively moving towards the top edge portion side of the escape holes 58B.

The above impact body 100 is presumed to be a barrier in a minimal wrap barrier crash test.

Explanation now follows regarding examples of modifications to the first exemplary embodiment of the present invention.

Whereas in the first exemplary embodiment of the present invention, as shown in Fig. 2, the elongated holes 58 are formed in the rear panel section 36 and the holes 60 are formed in the rear wall portion 46, configuration may be made with the elongated holes 58 formed in the rear wall portion 46 and the holes 60 formed in the rear panel section 36 in positions for fitting to the top edge portion of the elongated holes 58. The rear panel section 36 may then be fastened to the rear wall portion 46 with the bolts 64 in an inserted state into the top edge portion of the elongated holes 58 and the holes 60.

Furthermore, while the bolts 64 and the nuts 62 are employed for fastening the rear panel section 36 and the rear wall portion 46 together, configuration may be made employing other fasteners, such as, for example, rivets or the like.

Furthermore, while the sloping portion 34A is formed at the front edge side of the top panel section 34, configuration may be made with the sloping portion 34A formed over the entire top panel section 34.

Furthermore, while the bottom edge portion of the elongated holes 58 ends further towards the vehicle top side than the bottom marginal portion of the rear panel section 36, configuration may be made with the elongated holes 58 open at the bottom marginal portion of the rear panel section 36. Namely, the elongated holes 58 may be configured as slot shapes.

Furthermore, whereas the front panel section 32 and the front wall portion 42 are fastened by the bolts 54 and the nuts 52, configuration may be made with the front panel section 32 and the front wall portion 42 joined by, for example, welding.

Furthermore, whereas the front panel section 32 is joined to the front wall portion 42, configuration may be made such that, for example, the front panel section 32 is joined by welding or the like to a front portion of the top wall portion 44.

The same operation and effect as that of the first exemplary embodiment of the present invention can be exhibited by configurations as described above.

### Second Exemplary Embodiment

Explanation now follows regarding a second exemplary embodiment of the present invention.

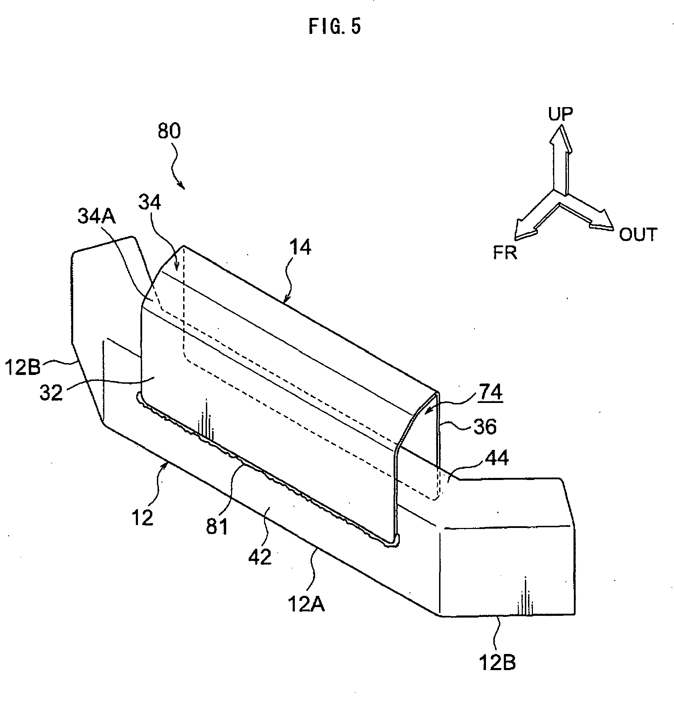

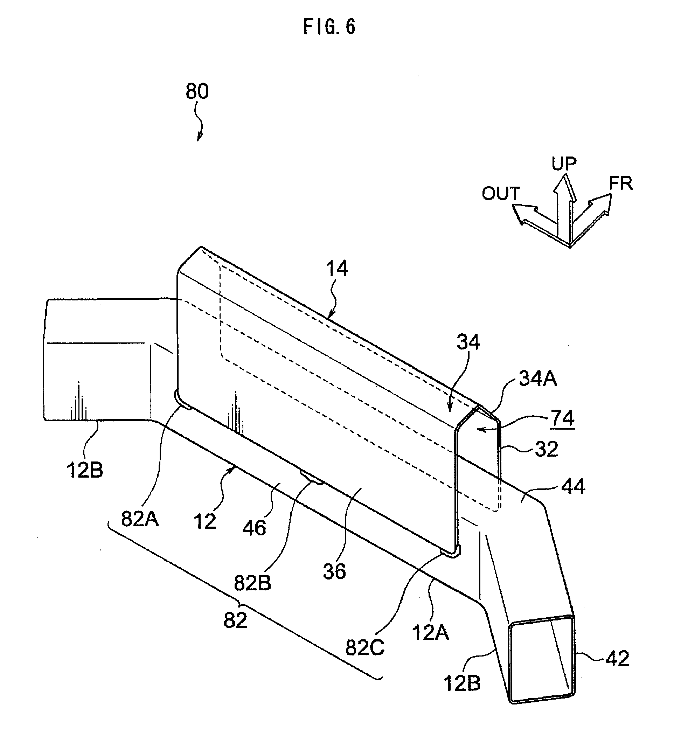

A bumper reinforcement structure 80 according to a second exemplary embodiment of the present invention, illustrated in Fig. 5 and Fig. 6, differs in fastening structure of the upper member 14 and the bumper reinforcement 12 from the bumper reinforcement structure 30 according to the first exemplary embodiment of the present invention in the following manner.

Namely, as shown in Fig. 5, the bottom marginal portion of the front panel section 32 is joined to the front wall portion 42 by a front weld portion 81. The front weld portion 81 is formed in the vehicle width direction along the entire length of the bottom marginal portion of the front panel section 32.

The bottom marginal portion of the rear panel section 36 is joined to the rear wall portion 46 by rear weld portions 82, as shown in Fig. 6. The rear weld portions 82 are configured by plural weld portions 82A, 82B, 82C which are formed at intervals along the vehicle width direction. By making the total length of the rear weld portions 82, that of the combined plural weld portions 82A, 82B, 82C, shorter than the front weld portion 81, the weld strength of the rear weld portion 82 is also lower than that of the front weld portion 81. The front weld portion 81 and the rear weld portions 82 are both made by, for example, ark welding or the like.

The rear weld portion 82 corresponds to the displacement facilitation portion and joint portion of the present invention.

Explanation now follows regarding points in the operation and effect of the second exemplary embodiment of the present invention differing from those of the first exemplary embodiment of the present invention.

According to the bumper reinforcement structure 80, when an impact body, such as the femoral region of a pedestrian or the like, impacts the vehicle front section, and an impact load is input with respect to the top panel section 34 from both the vehicle front side and the vehicle top side, the fastened state of the rear panel section 36 and the rear wall portion 46 is released by the rear weld portions 82 breaking. Accordingly, the top panel section 34, together with the rear panel section 36, then are displaced towards the vehicle bottom side with the top edge portion of the front panel section 32 acting as an origin point. Consequently, since a vehicle top-bottom direction deformation stroke with the impact body at the vehicle front section can be ensured, and capability to protect pedestrians can also be ensured.

An increase in cost can also be suppressed, since a special joining structure is not required for joining the rear panel section 36 and the rear wall portion 46 together.

Explanation now follows regarding examples of modification to the second exemplary embodiment of the present invention.

Whereas the rear weld portions 82 are configured with the three weld portions 82A, 82B, 82C in the second exemplary embodiment of the present invention, configuration may be made with a number of weld portions other than three.

Furthermore, whereas the front weld portion 81 is formed in the vehicle width direction along the entire length of the front panel section 32, as shown in Fig. 5, configuration may be made with plural weld portions formed at intervals along the vehicle width direction.

Namely, any mode may be adopted for the front weld portion 81 and the rear weld portions 82, as long as the weld strength of the rear weld portion(s) 82 is lower than that of the front weld portion(s) 81.

The operation and effect of the second exemplary embodiment of the present invention can also be exhibited by configurations as described above.

Note that applicable modification examples from the examples for modifying the first exemplary embodiment of the present invention given above may also be applied to the second exemplary embodiment of the present invention.

### Third Exemplary Embodiment

Explanation now follows regarding the third exemplary embodiment of the present invention.

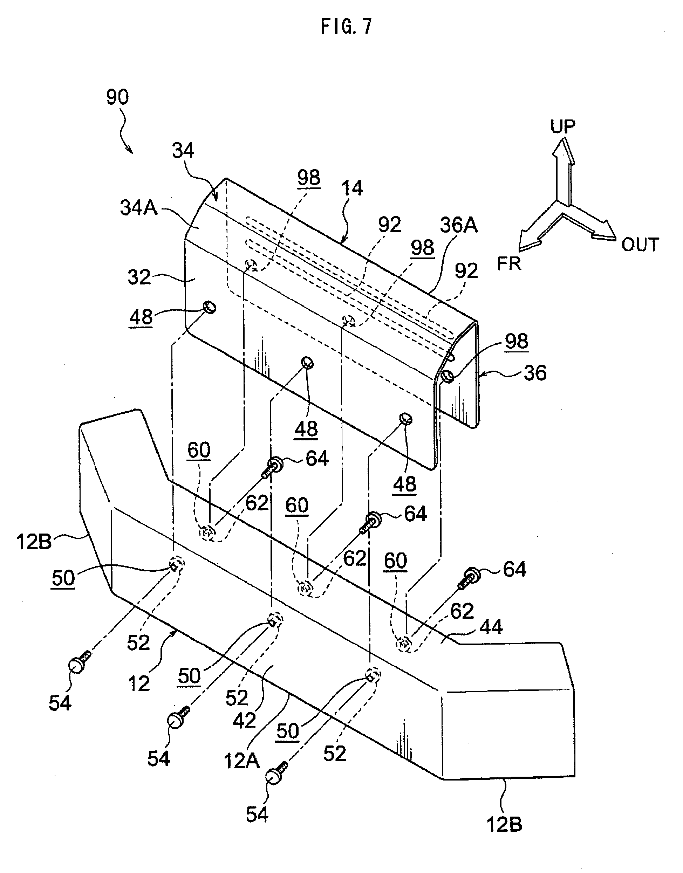

A bumper reinforcement structure 90 according to a third exemplary embodiment of the present invention, illustrated in Fig. 7, has a configuration of upper member 14 modified from that of the bumper reinforcement structure 30 according to the first exemplary embodiment of the present invention in the following manner.

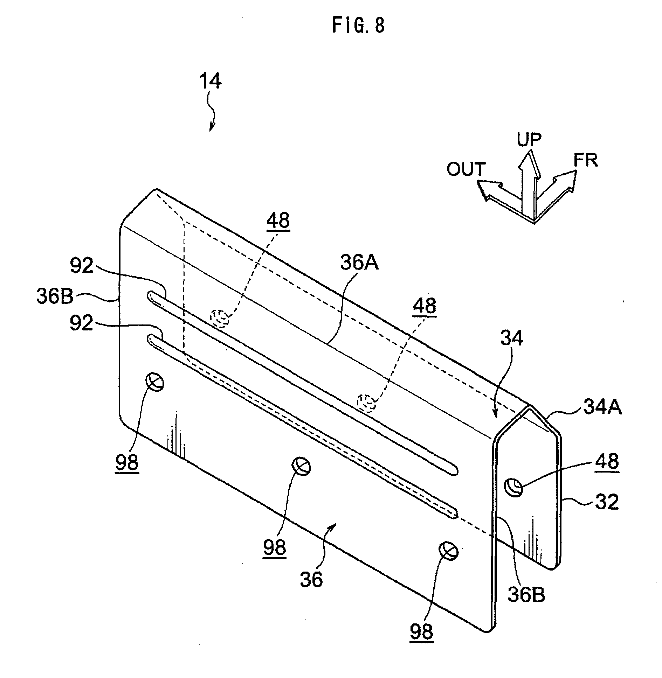

Namely, as shown in Fig. 8, plural beads 92 are formed to the rear panel section 36 in a row in the vehicle top-bottom direction. The plural beads 92 are formed between holes 98, described later, and a top edge portion 36A of the rear panel section 36. Each of the beads 92 extends along the vehicle width direction, and both end portions of the beads 92 end further to the vehicle width direction inside than both vehicle width direction end portions 36B of the rear panel section 36.

The holes 98 are formed in a lower portion of the rear panel section 36, as shown in Fig. 7, in positions for fitting together with the holes 60. Bolts 64 are inserted into the holes 60, 98 and screwed into the nuts 62, and the rear panel section 36 is thereby portion 46.

The above plural beads 92 correspond to the displacement facilitation portion and deformation origin portion of the present invention. The portion where the holes 98 are formed in the rear panel section 36 corresponds to the joint portion to the rear wall portion in the present invention.

Configuration is similar to that of the first exemplary embodiment of the present invention other than in the above described manner.

Explanation now follows regarding points where the operation and effect of the third exemplary embodiment of the present invention differs from those of the first exemplary embodiment of the present invention.

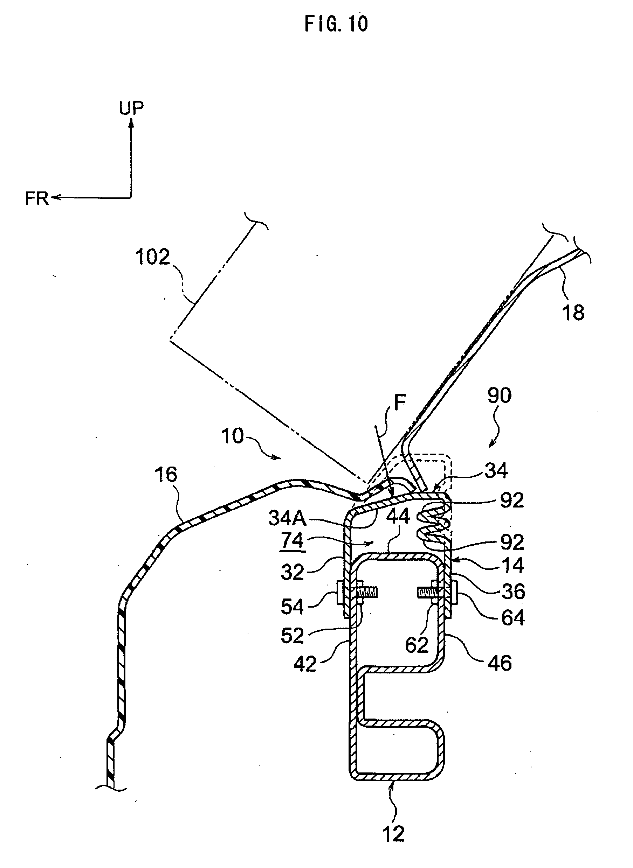

According to the bumper reinforcement structure 90, as shown in Fig. 10, when the vehicle front section 10 is impacted by a impact body 102, such as for example the femoral region of a pedestrian, and an impact load F is input with respect to the top panel section 34 from both the vehicle front side and the vehicle top side, the rear panel section 36 buckles (performs compressive deformation) with the beads 92 acting as origin points. Then the top panel section 34 accordingly is displaced towards the vehicle bottom side with the top edge portion of the front panel section 32 acting as an origin point. Consequently, a vehicle top-bottom direction deformation stroke with the impact body 102 at the vehicle front section 10 can be ensured, and hence capability to protect pedestrians can also be ensured.

Furthermore, an increase in cost can be suppressed, since the rear panel section 36 can be made to perform compressive deformation with a simple configuration, just by providing the beads 92.

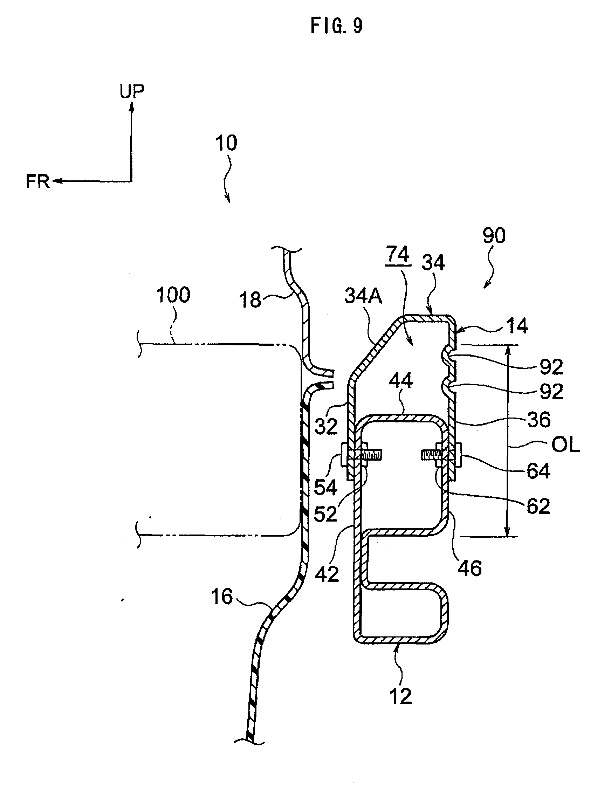

Furthermore, as shown in Fig. 9, the plural beads 92 are formed to the rear panel section 36 so as to extend along the vehicle width direction, hence rigidity of the upper member 14 can be ensured even if the vehicle front section 10 is impacted by the impact body 100 from the vehicle front side.

Explanation now follows regarding examples of modification of the third exemplary embodiment of the present invention.

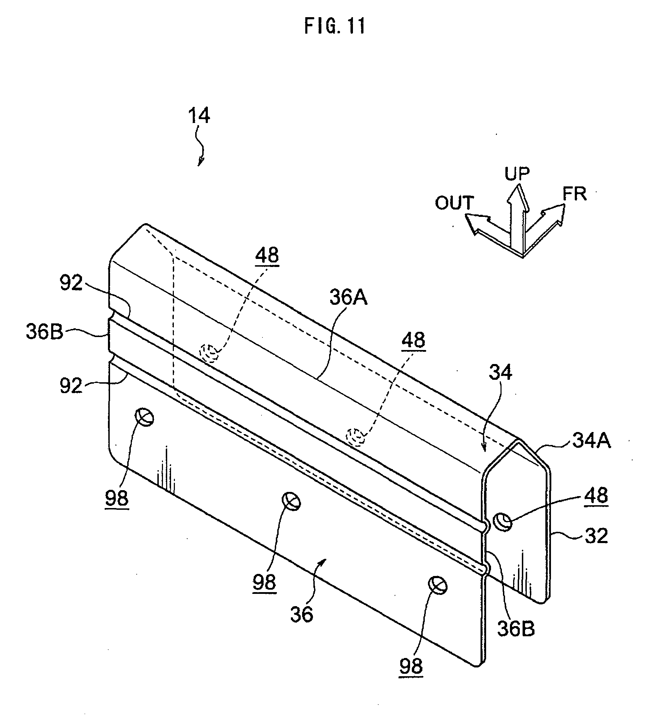

Whereas the two end portions of the beads 92 end further to the vehicle width direction inside than the two vehicle width direction end portions 36B of the rear panel section 36 in the third exemplary embodiment of the present invention, configuration may be made such that the beads 92 are open at the two vehicle width direction end portions 36B of the rear panel section 36, as shown in Fig. 11.

In such a configuration too, the rear panel section 36 can be made to buckle with the beads 92 acting as origin points when an impact load is input with respect to the top panel section 34 from both the vehicle front side and the vehicle top side.

Further, manufacture of the upper member 14 can be facilitated when both end portions of the beads 92 are open at the two vehicle width direction end portions 36B of the rear panel section 36.

Whereas the beads 92 are formed in the rear panel section 36 as deformation origin point portions in the third exemplary embodiment of the present invention, configuration may be made with other portions than the beads 92, as long as they act as deformation origin points.

Applicable modification examples from the examples of modifications in the first exemplary embodiment of the present invention may be applied to the third exemplary embodiment of the present invention.

While explanation of the present invention has been given above by way of some exemplary embodiments, the present invention is limited only by the attached claims, and of course various modifications can be implemented within a range not departing from those claims.

## Claims

1. A bumper reinforcement structure (30) comprising:
a bumper reinforcement (12) to be provided at a vehicle front section such that it extends in a vehicle width direction; and
an upper member (14), being a separate part from the bumper reinforcement (12), which is fixed to the bumper reinforcement (12) and which includes a front panel section (32) joined to the bumper reinforcement (12), a top panel section (34) connected to a top edge portion of the front panel section (32), and a rear panel section (36) connected to a rear edge portion of the top panel section (34), the upper member (14) being formed with a C-shaped cross-section opening towards a vehicle bottom side, the upper member (14) forming a closed cross-section portion (74) with a top wall portion (44) of the bumper reinforcement (12) at a vehicle top side of the bumper reinforcement (12); **characterized by** comprising:
a displacement facilitation portion (72) being provided at the rear panel section (36), the displacement facilitation portion (72) allowing the top panel section (34) to be displaced towards the vehicle bottom side in a case where an impact load is input with respect to the top panel section (34) from both the vehicle front side and the vehicle top side.

2. The bumper reinforcement structure (30) of claim 1, wherein the top panel section (34) is at least formed with a sloping portion (34A) at a front edge portion side of the top panel section (34), the sloping portion sloping (34A) with respect to a vehicle front-rear direction so as to face toward both the vehicle front side and the vehicle top side.

3. The bumper reinforcement structure (30) of claim 1 or claim 2, wherein the displacement facilitation portion is a joint portion (72) that joins the rear panel section (36) and the rear wall portion (46) of the bumper reinforcement (12); and a joined state of the rear panel section (36) and the rear wall portion (46) is released in a case where an impact load is input with respect to the top panel section (34) from both the vehicle front side and the vehicle top side.

4. The bumper reinforcement structure (30) of claim 3, wherein the joint portion (72) is configured to be a fastening structure (72) including a fastener (64), that passes though the rear panel section (36) and the rear wall portion (46) and fastens the rear panel section (36) and the rear wall portion (46) together, and an escape hole (58B) formed continuously toward the vehicle top side from a position of the fastener (64) in the rear panel section (36).

5. The bumper reinforcement structure (30) of claim 4, wherein the fastening structure (72) includes a latching portion (68) formed further toward the vehicle top side than the position of the fastener (64) in the rear panel section (36), with the latching portion (68) latching the fastener (64).

6. The bumper reinforcement structure (80) of claim 3, wherein the joint portion (82) is configured to be a rear weld portion (82) that joins the rear panel section (36) to the rear wall portion (46) with a weld strength lower than that of a front weld portion (81) that joins the front panel section (32) to the bumper reinforcement (12).

7. The bumper reinforcement structure (90) of claim 1 or claim 2, wherein the displacement facilitation portion is configured to be a deformation origin point portion (92) that acts as an origin point for deformation of the rear panel section (36), such that the rear panel section (36) is compressively deformed in a case where an impact load is input with respect to the top panel section (34) from both the vehicle front side and the vehicle top side.

8. The bumper reinforcement structure (30) of claim 7, wherein the deformation origin point portion is configured to be a bead (92) formed between a joint portion joining the rear panel section (36) with the rear wall portion (46) of the bumper reinforcement (12) and a top edge portion of the rear panel section (36), and the bead (92) extending in the vehicle width direction.

## Patentansprüche

1. Stoßfängerverstärkungsstruktur (30) mit:
einer Stoßfängerverstärkung (12), welche an einem Fahrzeugfrontabschnitt derart vorgesehen ist, dass sie sich in Fahrzeugquerrichtung erstreckt; und
einem oberen Element (14), welches ein von der Stoßfängerverstärkung (12) separates Bauteil ist, das an der Stoßfängerverstärkung (12) befestigt ist und das einen Vorderseitenplattenabschnitt (32), der mit der Stoßfängerverstärkung (12) verbunden ist, einen Oberseitenplattenabschnitt (34), der mit einem oberen Randabschnitt des Vorderseitenplattenabschnitts (32) verbunden ist, und einen Rückseitenplattenabschnitt (36), der mit einem hinteren Randabschnitt des Oberseitenplattenabschnitts (34) verbunden ist, aufweist, wobei das obere Element (14) mit einem C-förmigen Querschnitt ausgebildet ist, welcher sich in einer zur Fahrzeugunterseite weisenden Richtung öffnet, und wobei das obere Element (14) mit einem Oberseitenwandabschnitt (44) der Stoßfängerverstärkung (12) an einer zur Fahrzeugoberseite weisenden Seite der Stoßfängerverstärkung (12) einen geschlossenen Querschnittsabschnitt (74) ausbildet; **gekennzeichnet durch**
einen Verschiebungserleichterungsabschnitt (72), der am Rückseitenplattenabschnitt (36) vorgesehen ist und der es in einem Fall, in dem eine Aufpralllast sowohl von der Fahrzeugfrontseite als auch von der Fahrzeugoberseite in den Oberseitenplattenabschnitt (34) eingeleitet wird, zulässt, dass der Oberseitenplattenabschnitt (34) in der zur Fahrzeugunterseite weisenden Richtung verschoben wird.

2. Stoßfängerverstärkungsstruktur (30) nach Anspruch 1, wobei der Oberseitenplattenabschnitt (34) mit zumindest einem geneigten Abschnitt (34A) an einer Vorderseitenrandabschnittsseite des Oberseitenplattenabschnitts (34) ausgebildet ist, und der geneigte Abschnitt bezüglich der Fahrzeuglängsrichtung derart geneigt ist, dass er sowohl der Fahrzeugfrontseite als auch der Fahrzeugoberseite zugewandt ist.

3. Stoßfängerverstärkungsstruktur (30) nach Anspruch 1 oder 2, wobei der Verschiebungserleichterungsabschnitt ein Verbindungsabschnitt (72) ist, der den Rückseitenplattenabschnitt (36) und einen Rückseitenwandabschnitt (46) der Stoßfängerverstärkung (12) verbindet, und der Zustand, in dem der Rückseitenplattenabschnitt (36) und der Rückseitenwandabschnitt (46) verbunden sind, in einem Fall gelöst wird, in dem eine Aufpralllast sowohl von der Fahrzeugfrontseite als auch von der Fahrzeugoberseite in den Oberseitenplattenabschnitt (34) eingeleitet wird.

4. Stoßfängerverstärkungsstruktur (30) nach Anspruch 3, wobei der Verbindungsabschnitt (72) als eine Befestigungsstruktur (72) ausgestaltet ist, welche ein Befestigungsmittel (64) aufweist, das sich durch den Rückseitenplattenabschnitt (36) und den Rückseitenwandabschnitt (46) erstreckt und das den Rückseitenplattenabschnitt (36) und den Rückseitenwandabschnitt (46) aneinander befestigt, und welche ein Austrittsloch (58B) aufweist, das an dem Rückseitenplattenabschnitt (36) von einer Position des Befestigungsmittels (64) aus in Richtung der Fahrzeugoberseite durchgehend ausgeformt ist.

5. Stoßfängerverstärkungsstruktur (30) nach Anspruch 4, wobei die Befestigungsstruktur (72) im Rückseitenplattenabschnitt (36) oberhalb des Befestigungsmittels (64) einen Einrastabschnitt (68) aufweist, der das Befestigungsmittel (64) verrastet.

6. Stoßfängerverstärkungsstruktur (80) nach Anspruch 3, wobei der Verbindungsabschnitt (82) als ein Rückseitenschweißabschnitt (82) ausgebildet ist, welcher den Rückseitenplattenabschnitt (36) mit dem Rückseitenwandabschnitt (46) mit einer Schweißfestigkeit verbindet, die niedriger ist als die Schweißfestigkeit eines Vorderseitenschweißabschnitts (81), welcher den Vorderseitenplattenabschnitt (32) mit der Stoßfängerverstärkung (12) verbindet.

7. Stoßfängerverstärkungsstruktur (90) nach Anspruch 1 oder 2, wobei der Verschiebungserleichterungsabschnitt als ein Verformungsausgangspunktabschnitt (92) ausgebildet ist, welcher derart als Ausgangspunkt für eine Verformung des Rückseitenplattenabschnitts (36) dient, dass der Rückseitenplattenabschnitt (36) gestaucht wird, wenn eine Aufpralllast sowohl von der Fahrzeugfrontseite als auch von der Fahrzeugoberseite in den Oberseitenplattenabschnitt (34) eingeleitet wird.

8. Stoßfängerverstärkungsstruktur (90) nach Anspruch 7, wobei der Verformungsausgangspunktabschnitt (92) als eine Sicke (92) ausgebildet ist, welche zwischen einem Verbindungsabschnitt, der den Rückseitenplattenabschnitt (36) mit dem Rückseitenwandabschnitt (46) der Stoßfängerverstärkung (12) verbindet, und einem oberen Randabschnitt des Rückseitenplattenabschnitts (36) ausgeformt ist und sich in Fahrzeugquerrichtung erstreckt.

## Revendications

1. Structure de renfort de pare-chocs (30) comprenant :
un renfort de pare-chocs (12) devant être prévu au niveau d'une section avant de véhicule de sorte qu'il s'étende dans une direction de largeur de véhicule ; et
un élément supérieur (14), étant une partie séparée du renfort de pare-chocs (12), qui est fixé au renfort de pare-chocs (12) et qui comporte une section de panneau avant (32) assemblée au renfort de pare-chocs (12), une section de panneau supérieure (34) reliée à une partie de bord supérieure de la section de panneau avant (32), et une section de panneau arrière (36) reliée à une partie de bord arrière de la section de panneau supérieure (34), l'élément supérieur (14) étant formé d'une section transversale en forme de C s'ouvrant vers un côté inférieur de véhicule, l'élément supérieur (14) formant une partie de section transversale fermée (74) avec une partie de paroi supérieure (44) du renfort de pare-chocs (12) au niveau d'un côté supérieur de véhicule du renfort de pare-chocs ;
**caractérisée en ce qu'**elle comprend :
une partie de facilitation de déplacement (72) étant prévue au niveau la section de panneau arrière (36), la partie de facilitation de déplacement (72) permettant à la section de panneau supérieure (34) d'être déplacée vers le côté inférieur de véhicule dans le cas où une charge de choc est introduite par rapport à la section de panneau supérieure (34) à partir à la fois du côté avant de véhicule et du côté supérieur de véhicule.

2. Structure de renfort de pare-chocs (30) de la revendication 1, dans laquelle la section de panneau supérieure (34) est au moins formée d'une partie inclinée (34A) au niveau d'un côté de partie de bord avant de la section de panneau supérieure (34), la partie inclinée (34A) s'inclinant par rapport à une direction avant-arrière de véhicule de manière à être orientée à la fois vers le côté avant de véhicule et le côté supérieur de véhicule.

3. Structure de renfort de pare-chocs (30) de la revendication 1 ou 2, dans laquelle la partie de facilitation de déplacement est une partie de jonction (72) qui assemble la section de panneau arrière (36) et la partie de paroi arrière (46) du renfort de pare-chocs (12) ; et un état assemblé de la section de panneau arrière (36) et de la partie de paroi arrière (46) est libéré dans le cas où une charge de choc est introduite par rapport à la section de panneau supérieure (34) à la fois du côté avant de véhicule et du côté supérieur de véhicule.

4. Structure de renfort de pare-chocs (30) de la revendication 3, dans laquelle la partie de jonction (72) est configurée pour être une structure de fixation (72) comportant un élément de fixation (64), qui passe à travers la section de panneau arrière (36) et la partie de paroi arrière (46) et fixe la section de panneau arrière (36) et la partie de paroi arrière (46) ensemble, et un trou d'échappement (58B) formé en continu en direction du côté supérieur de véhicule à partir d'une position de l'élément de fixation (64) dans la section de panneau arrière (36).

5. Structure de renfort de pare-chocs (30) de la revendication 4, dans laquelle la structure de fixation (72) comporte une partie de verrouillage (68) formée davantage en direction du côté supérieur de véhicule que la position de l'élément de fixation (64) dans la section de panneau arrière (36), avec la partie de verrouillage (68) verrouillant l'élément de fixation (64).

6. Structure de renfort de pare-chocs (80) de la revendication 3, dans laquelle la partie de jonction (82) est configurée pour être une partie de soudure arrière (82) qui assemble la section de panneau arrière (36) à la partie de paroi arrière (46) avec une résistance de soudure inférieure à celle d'une partie de soudure avant (81) qui relie la section de panneau avant (32) au renfort de pare-chocs (12).

7. Structure de renfort de pare-chocs (90) de la revendication 1 ou 2, dans laquelle la partie de facilitation de déplacement est configurée pour être une partie de point d'origine de déformation (92) qui agit en tant que point d'origine de déformation de la section de panneau arrière (36), de sorte que la section de panneau arrière (36) soit déformée par compression dans le cas où une charge de choc est introduite par rapport à la section de panneau supérieure (34) à la fois du côté avant de véhicule et du côté supérieur de véhicule.

8. Structure de renfort de pare-chocs (30) de la revendication 7, dans laquelle la partie de point d'origine de déformation est configurée pour être un bourrelet (92) formé entre une partie de jonction assemblant la section de panneau arrière (36) avec la partie de paroi arrière (46) du renfort de pare-chocs (12) et une partie de bord supérieure de la section de panneau arrière (36), et le bourrelet (92) s'étendant dans la direction de largeur de véhicule.
